# EUROPEAN PATENT APPLICATION

(11) **EP 4 530 896 A2**
(43) Date of publication of application: **02.04.2025**
(21) Application number: 24202810.8
(22) Date of filing: 26.09.2024
(51) Int. Cl.: G06F 21/10, H04L 9/40, H04N 21/254, H04N 21/2543, H04N 21/4627, H04N 21/472

(54) **SYSTEM AND METHOD FOR PAY-PER-VIEW USING A PAYMENT NETWORK**

(30) Priority: 26.09.2023 US 202318474369
(71) Applicant: Visa International Service Association, San Francisco, California 94128 (US)
(72) Inventor: Agarwal, Ved Prakash Sajjan Kumar, Dubai (AE)
(74) Representative: EIP

(57) **Abstract**

A pay-per-view system and method are disclosed. A token management server computer receives an account credential from a content creator and sends a content creator token reference to a content delivery network. A content license server computer receives a request for a content license key from a content player. The request includes the content creator token reference and a content player token reference. The content license server computer validates the content creator token reference, validates the content player token reference, receives a token validation response from the token management server computer, creates a time bound license for content created by the content creator, and sends the content license key to the content player.

## Description

### TECHNICAL FIELD

The present disclosure is directed to a pay-per-view media content tokenization system. More particularly, the present disclosure is directed to a pay-per-view media content tokenization system for content creators to monetize their media content.

### SUMMARY

In one aspect, the present disclosure provides a pay-per-view system. The system comprisinga token management server computer to receive an account credential from a content creator; and send a content creator token reference to a content delivery network; a content license server computer to receive a request for a content license key from a content player, wherein the request comprises the content creator token reference and a content player token reference; validate the content creator token reference; validate the content player token reference; receive a token validation response from the token management server computer; create a time bound license for content created by the content creator; and send the content license key to the content player.

In another aspect, present disclosure provides a pay-per-view method. The method comprising receiving, by a token management server computer, an account credentials from a content creator; and sending, by the token management server computer, a content creator token reference to a content delivery network; receiving, by a content license server computer, a request for a content license key from a content player, wherein the request comprises the content creator token reference and a content player token reference; validating, by the content license server computer, the content creator token reference; validating, by the content license server computer, the content player token reference; receiving, by the content license server computer, a token validation response from the token management server computer; creating, by the content license server computer, a time bound license for content created by the content creator; and sending, by a content license server computer, the content license key to the content player.

In yet another aspect, the present disclosure provides a content delivery system. The system comprising a content delivery server computer to receive an encrypted media content file; package the encrypted media content file with a manifest file comprising metadata information and creating a packaged encrypted media content file; send an account credential to a token management system; receive a content creator token reference from the token management system; update the content creator token reference in the manifest file metadata information; and deliver the packaged encrypted media content file and the manifest file to a content delivery network.

### BRIEF DESCRIPTION OF THE DRAWINGS

In the description, for purposes of explanation and not limitation, specific details are set forth, such as particular aspects, procedures, techniques, etc. to provide a thorough understanding of the present technology. However, it will be apparent to one skilled in the art that the present technology may be practiced in other aspects that depart from these specific details.

The accompanying drawings, where like reference numerals refer to identical or functionally similar elements throughout the separate views, together with the detailed description below, are incorporated in and form part of the specification, and serve to further illustrate aspects of concepts that include the claimed disclosure and explain various principles and advantages of those aspects.

The apparatuses, systems, methods, and computer readable media disclosed herein have been represented where appropriate by conventional symbols in the drawings, showing only those specific details that are pertinent to understanding the various aspects of the present disclosure so as not to obscure the disclosure with details that will be readily apparent to those of ordinary skill in the art having the benefit of the description herein.
FIG. 1 illustrates a pay-per-view system without a video streaming service, according to at least one aspect of the present disclosure.
FIG. 2 is a logic flow diagram of a process for the pay-per-view system without a video streaming service shown in FIG. 1, according to at least one aspect of the present disclosure.
FIG. 3 is a swimlane diagram of an implementation of the process shown in FIG. 2, according to at least one aspect of the present disclosure.
FIG. 4 illustrates a pay-per-view system with a video streaming service provider, according to at least one aspect of the present disclosure.
FIG. 5 is a logic flow diagram of a process for the pay-per-view system without a video streaming service provider shown in FIG. 4, according to at least one aspect of the present disclosure.
FIG. 6 is a swimlane diagram of an implementation of the process shown in FIG. 5, according to at least one aspect of the present disclosure.
FIG. 7 illustrates a block diagram of a tokenization environment portion of the tokenization system shown in FIGS. 1 and 4, according to at least one aspect of the present disclosure.
FIG. 8 shows a block diagram of a processing network computer, according to at least one aspect of the present disclosure.
FIG. 9 is a block diagram of a computer apparatus with data processing subsystems or components, according to at least one aspect of the present disclosure.
FIG. 10 is a diagrammatic representation of an example system that includes a host machine within which a set of instructions to perform any one or more of the methodologies discussed herein may be executed, according to at least one aspect of the present disclosure.

### DESCRIPTION

The following disclosure may provide example systems, devices, and methods for conducting a financial transaction and related activities. Although reference may be made to such financial transactions in the examples provided below, aspects are not so limited. That is, the systems, methods, and apparatuses may be utilized for any suitable purpose.

Before discussing specific embodiments, aspects, or examples, some descriptions of terms used herein are provided below.

"Account credential," "account number," "payment credential," or "identification information" may refer to any suitable information that identifies an account or is associated with an account (e.g., a payment account and/or payment device associated with the account) that allows a payment processor to verify that a device, person, or entity has permission to access the account. Such information may be directly related to the account or may be derived from information related to the account. For example, account credentials may include an account identifier (e.g., a primary account number [PAN]), a token (e.g., account identifier substitute), an expiration date, a cryptogram, a card verification value (CVV), dynamic card verification value (dCVV), card verification value 2 (CW2), personal information associated with an account (e.g., user name, address, expiration date, etc.), an account alias, or any combination thereof. Account credentials may be static or dynamic such that they change over time. Further, in some embodiments or aspects, the account credentials may include information that is both static and dynamic. For example, an account identifier and expiration date may be static but a cryptogram may be dynamic and change for each transaction.

Further, in some embodiments or aspects, some or all of the account credentials may be stored in a secure memory of a user device. The secure memory of the user device may be configured such that the data stored in the secure memory may not be directly accessible by outside applications and a payment application associated with the secure memory may be accessed to obtain the credentials stored on the secure memory. Accordingly, a mobile application may interface with a payment application in order to gain access to payment credentials stored on the secure memory. Payment credentials may be any information that identifies or is associated with a payment account. Payment credentials may be provided in order to make a payment from a payment account. Payment credentials can also include a user name, an expiration date, a gift card number or code, and any other suitable information. "Credential" may be any suitable information that serves as reliable evidence of worth, ownership, identity, or authority. A credential may be a string of numbers, letters, or any other suitable characters that may be present or contained in any object or document that can serve as confirmation. Examples of credentials include value credentials, identification cards, certified documents, access cards, passcodes and other login information, etc. "Primary account number (PAN)" may be a variable length, (e.g., 13 to 19-digit) industry standard-compliant account number that is generated within account ranges associated with a BIN by an issuer.

"Account identifier" may refer to one or more types of identifiers associated with an account (e.g., a unique identifier of an account, an account number, a PAN, a card number, a payment card number, a token, and/or the like) of a user. In some non-limiting embodiments or aspects, an issuer may provide an account identifier (e.g., a PAN, a token, a globally unique identifier (GUID), a universally unique identifier (UUID), and/or the like) to a user that uniquely identifies one or more accounts associated with that user. In some non-limiting embodiments or aspects, an account identifier may be embodied on a payment device (e.g., a portable financial instrument, a payment card, a credit card, a debit card, and/or the like) and/or may be electronic information communicated to the user that the user may use for electronic payment transactions. In some non-limiting embodiments or aspects, an account identifier may be an original account identifier, where the original account identifier was provided to a user at the creation of the account associated with the account identifier. In some non-limiting embodiments or aspects, the account identifier may be an account identifier (e.g., a supplemental account identifier) that is provided to a user after the original account identifier was provided to the user. For example, if the original account identifier is forgotten by the user, stolen from the user, and/or the like, a supplemental account identifier may be provided to the user. In some non-limiting embodiments or aspects, an account identifier may be directly or indirectly associated with an issuer such that an account identifier may be a token that maps to a PAN or other type of identifier. Account identifiers may be alphanumeric, any combination of characters and/or symbols, and/or the like.

"Account token" may refer to an identifier that is used as a substitute or replacement identifier for an account identifier, such as a PAN. An account token may be used as a substitute or replacement identifier for an original account identifier, such as a PAN. Account tokens may be associated with a PAN or other original account identifier in one or more data structures (e.g., one or more databases and/or the like) such that they may be used to conduct a transaction without directly using the original account identifier. In some non-limiting embodiments or aspects, an original account identifier, such as a PAN, may be associated with a plurality of account tokens for different individuals or purposes. In some non-limiting embodiments aspects, account tokens may be associated with a PAN or other account identifiers in one or more data structures such that they can be used to conduct a transaction without directly using the account identifier, such as a PAN. In some examples, an account identifier, such as a PAN, may be associated with a plurality of account tokens for different uses or different purposes.

"Assigned token assurance level" may refer to the actual (e.g., generated) value assigned by the token service provider to the token as the result of the identification and verification (ID&V) process performed by an entity within the tokenization ecosystem. The assigned token assurance level may be provided back to the token requestor in response to the token request message. The assigned token assurance level may be different than the requested token assurance level included in the token request message.

"Authentication" is a process by which the credential of an endpoint (including but not limited to applications, people, devices, process, and systems) can be verified to ensure that the endpoint is who they are declared to be.

"Communication channel" may refer to any suitable path for communication between two or more entities. Suitable communications channels may be present directly between two entities such as a payment processing network and a merchant or issuer computer, or may include a number of different entities. Any suitable communications protocols may be used for generating a communications channel. A communication channel may in some instances comprise a "secure communication channel" or a "tunnel," either of which may be established in any known manner, including the use of mutual authentication and a session key and establishment of a secure communications session. However, any method of creating a secure communication channel may be used, and communication channels may be wired or wireless, as well as long-range, short-range, or medium-range. By establishing a secure channel, sensitive information related to a payment device (such as account number, CW values, expiration dates, etc.) may be securely transmitted between the two entities to facilitate a transaction.

"Communication" and "communicate" may refer to the reception, receipt, transmission, transfer, provision, and/or the like of information (e.g., data, signals, messages, instructions, calls, commands, and/or the like). A communication may use a direct or indirect connection and may be wired and/or wireless in nature. As an example, for one unit (e.g., a device, a system, a component of a device or system, combinations thereof, and/or the like) to communicate with another unit means that the one unit is able to directly or indirectly receive information from and/or transmit information to the other unit. The one unit may communicate with the other unit even though the information may be modified, processed, relayed, and/or routed between the one unit and the other unit. In one example, a first unit may communicate with a second unit even though the first unit receives information and does not communicate information to the second unit. For example, a first unit may be in communication with a second unit even though the first unit passively receives data and does not actively transmit data to the second unit. As another example, a first unit may communicate with a second unit if an intermediary unit (e.g., a third unit located between the first unit and the second unit) receives information from the first unit, processes the information received from the first unit to produce processed information, and communicates the processed information to the second unit. In some non-limiting embodiments or aspects, a message may refer to a packet (e.g., a data packet, a network packet, and/or the like) that includes data. It will be appreciated that numerous other arrangements are possible.

"Comprising" is not intended to be limiting, but may be a transitional term synonymous with "including," "containing," or "characterized by." The term "comprising" may thereby be inclusive or open-ended and does not exclude additional, unrecited elements or method steps when used in a claim. For instance, in describing a method, "comprising" indicates that the claim is open-ended and allows for additional steps. In describing a device, "comprising" may mean that a named element(s) may be essential for an embodiment or aspect, but other elements may be added and still form a construct within the scope of a claim. In contrast, the transitional phrase "consisting of" excludes any element, step, or ingredient not specified in a claim. This is consistent with the use of the term throughout the specification.

"Content creator" may refer to an individual or entity that creates media content. Content is any information contained within communication media. This includes internet, cinema, television, radio, audio CDs, books, magazines, physical art, and live event content. It is directed at an end-user, audience, or content consumer utilizing a content player.

"Content consumer" may refer to any individual or entity that consumes content created by a content creator over content delivery network.

"Content delivery network", or content distribution network, may refer to a geographically distributed network of proxy servers and their data centers. The goal is to provide high availability and performance by distributing the service spatially relative to end users. A content delivery network of interconnected servers speeds up webpage loading for data-heavy applications. The content delivery network, or content distribution network, can store website content in servers that are geographically closer to the user or content consumer such that when a user visits a website, data from that website's server does not have to travel across the internet to reach the user's computer. If the user is located closer to that server, it will shorten the time to load a large file, such as a video or website image and reache their computers much faster.

"Content player" may refer to player software or any type of application software for playing multimedia computer files like audio and video files. Media players commonly display standard media control icons known from physical devices such as tape recorders and CD players, such as play, pause, fast-forward, rewind, and stop buttons.

"Computing device" or "computer device" may refer to one or more electronic devices that are configured to directly or indirectly communicate with or over one or more networks. A computing device may be a mobile device, a desktop computer, and/or the like. As an example, a mobile device may include a cellular phone (e.g., a smartphone or standard cellular phone), a portable computer, a wearable device (e.g., watches, glasses, lenses, clothing, and/or the like), a personal digital assistant (PDA), and/or other like devices. The computing device may not be a mobile device, such as a desktop computer. Furthermore, the term "computer" may refer to any computing device that includes the necessary components to send, receive, process, and/or output data, and normally includes a display device, a processor, a memory, an input device, a network interface, and/or the like.

"Cryptographic algorithm" can be an encryption algorithm that transforms original data into an alternate representation, or a decryption algorithm that transforms encrypted information back to the original data. Examples of cryptographic algorithms may include triple data encryption standard (TDES), data encryption standard (DES), advanced encryption standard (AES), etc. Encryption techniques may include symmetric and asymmetric encryption techniques.

"Device," "server," "processor," and/or the like, may refer to a previously-recited device, server, or processor that is recited as performing a previous step or function, a different server or processor, and/or a combination of servers and/or processors. For example, as used in the specification and the claims, a first server or a first processor that is recited as performing a first step or a first function may refer to the same or different server or the same or different processor recited as performing a second step or a second function.

"Digital wallet," "electronic wallet," or "mobile wallet" may refer to an electronic device (e.g., a mobile device), a software application configured to initiate and/or conduct transactions (e.g., payment transactions, electronic payment transactions, and/or the like), an application program and server-side software and/or databases for maintaining and providing transaction data to the user device that allows an individual to conduct electronic commerce transactions. A digital, electronic, or mobile wallet may be designed to streamline the purchase and payment process. A digital, electronic, or mobile wallet may allow the user to load one or more payment cards onto the digital wallet so as to make a payment without having to enter an account number or present a physical card. A digital, electronic, or mobile wallet can store user profile information, payment information (including tokens), bank account information, and/or the like and can be used in a variety of transactions, such as but not limited to eCommerce, social networks, money transfer/personal payments, mobile commerce, proximity payments, gaming, and/or the like for retail purchases, digital goods purchases, utility payments, purchasing games or gaming credits from gaming websites, transferring funds between users, and/or the like.

"Gateway processing service" may refer to a service that enables transaction processing via multiple payment processing networks through a single connection to the gateway processing service. The gateway processing service may include one or more servers, data processing subsystems, networks, and operations used to deliver authorization services, exception file services, and clearing and settlement services. An authorization request message received by the gateway processing service may be routed to one of a plurality of payment processing networks according to a routing priority list. The gateway processing service may assess network connectivity of payment processing networks and may use this information in the routing of authorization request messages.

"Identification and verification (ID&V) method" may be used to ensure that the payment token is replacing a PAN that was legitimately being used by the token requestor. Examples of ID&V methods may include, but are not limited to, an account verification message, a risk score based on assessment of the primary account number (PAN) and use of one time password by the issuer or its agent to verify the account holder. Example ID&V methods may be performed using information such as a user signature, a password, an offline or online personal identification number (PIN), an offline or online enciphered PIN, a combination of offline PIN and signature, a combination of offline enciphered PIN and signature, user biometrics (e.g. voice recognition, fingerprint matching, etc.), a pattern, a glyph, knowledge-based challenge responses, hardware tokens (multiple solution options), one time passwords (OTPs) with limited use, software tokens, two-channel authentication processes (e.g., via phone), etc. Using the ID&V, a confidence level may be established with respect to the token to PAN binding.

"Interface" may include any software module configured to process communications. For example, an interface may be configured to receive, process, and respond to a particular entity in a particular communication format. Further, a computer, device, and/or system may include any number of interfaces depending on the functionality and capabilities of the computer, device, and/or system. In some embodiments or aspects, an interface may include an application programming interface (API) or other communication format or protocol that may be provided to third parties or to a particular entity to allow for communication with a device. Additionally, an interface may be designed based on functionality, a designated entity configured to communicate with, or any other variable. For example, an interface may be configured to allow for a system to field a particular request or may be configured to allow a particular entity to communicate with the system.

"Key" may refer to a piece of information that is used in a cryptographic algorithm to transform input data into another representation. An example encryption key may include a master derivation key (MDK) which may be used to generate a limited use key (LUK) that is provided to a computer device of a user. An LUK can be an encryption key that is intended for limited use (e.g., a limited number of transactions or a limited time period) and is not intended to be used for the lifetime of an account. Further details regarding LUKs can be found in U.S. Published Patent Application No. 2015/0180836, which is herein incorporated by reference in its entirety and is assigned to the same assignee as the present application. The MDK may be used to generate and provision the token, as well as, authenticate the token when used in authorization processing by validating static and variable transaction data.

"Key check value (KCV)" may refer to value obtained by passing a data value through a non-reversible algorithm. The key check value may be calculated using a cryptographic algorithm which takes as input a secret key and an arbitrary string, and which gives a cryptographic check value as output. The computation of a correct check value without knowledge of the secret key is not feasible.

"Payment network" may refer to an electronic payment system used to accept, transmit, or process transactions made by payment devices for money, goods, or services. The payment network may transfer information and funds among issuers, acquirers, merchants, and payment device users. One illustrative non-limiting example of a payment network is VisaNet, which is operated by Visa, Inc.

"Payment processing network" may refer to a system that receives accumulated transaction information from the gateway processing service, typically at a fixed time each day, and performs a settlement process. Settlement may involve posting the transactions to the accounts associated with the payment devices used for the transactions and calculating the net debit or credit position of each user of the payment devices. An example payment processing network is Interlink^{®}.

"Processing network" may include an electronic system used to accept, transmit, or process transactions made by devices. The processing network may transfer information among transacting parties (e.g., issuers, acquirers, merchants, device users, etc.).

"Server computer" may typically be a powerful computer or cluster of computers. For example, the server computer can be a large mainframe, a minicomputer cluster, or a group of servers functioning as a unit. The server computer may be associated with an entity such as a payment processing network, a wallet provider, a merchant, an authentication cloud, an acquirer or an issuer. In one example, the server computer may be a database server coupled to a Web server. The server computer may be coupled to a database and may include any hardware, software, other logic, or combination of the preceding for servicing the requests from one or more client computers. The server computer may comprise one or more computational apparatuses and may use any of a variety of computing structures, arrangements, and compilations for servicing the requests from one or more client computers. In some embodiments or aspects, the server computer may provide and/or support payment network cloud service.

"System" may refer to one or more computing devices or combinations of computing devices (e.g., processors, servers, client devices, software applications, components of such, and/or the like).

"Token" or "payment token" may include an identifier for a payment account that is a substitute for an account identifier, such as a PAN. For example, a token may include a series of numeric and/or alphanumeric characters that may be used as a substitute for an original account identifier. For example, a token "4900 0000 0000 0001" may be used in place of a PAN "4147 0900 0000 1234." In some embodiments or aspects, a token may be "format preserving" and may have a numeric format that conforms to the account identifiers used in existing payment processing networks (e.g., ISO 8583 financial transaction message format). In some embodiments or aspects, a token may be used in place of a PAN to initiate, authorize, settle or resolve a payment transaction or represent the original credential in other systems where the original credential would typically be provided. In some embodiments or aspects, a token value may be generated such that the recovery of the original PAN or other account identifier from the token value may not be computationally derived. For example, a token may have a random association with a particular real PAN so that the real PAN is not computationally derivable from the token. A lookup table may be used to associate a real PAN and a corresponding random token. Further, in some embodiments or aspects, the token format may be configured to allow the entity receiving the token to identify it as a token and recognize the entity that issued the token.

According to various embodiments or aspects, a token may be associated with a token status. The token status may indicate, for example, that the token is a high quality token or a low quality token. The status of the token may be indicative of a level of restriction associated with the token. For example, no restrictions may be imposed on a high quality token whereas restrictions such as further identification requirements may be imposed on a low quality token. The status of the token may be based at least in part on the confidence level with which the token is generated.

In some embodiments or aspects, tokens may be device-specific such that each device associated with an account may be provisioned with a particular token. As such, if a transaction uses a token that is initiated by a different device than the device that the token was provisioned into, the transaction may be fraudulent. Accordingly, device information may be stored in the token vault and used to ensure that the device used in a transaction is associated with the token that is being used in the transaction. Additionally, because each token may be associated with a single device, one PAN or account may have multiple tokens associated with it, where each PAN may have a different token for the different devices that may be used to initiate a transaction associated with the PAN using a specific token. This provides additional security for transactions because network token systems have additional information to validate in order to control the use of sensitive information in a transaction processing system .A number of tokens can include a number of dynamic tokens that can be requested for the same account identifier (e.g., PAN) and/or same device at one time. In some embodiments or aspects, the number of tokens can be optionally provided to the token requestor at the time of a token generation request. In some embodiments or aspects, tokens may be provided with overlapping time to live (TTL) so that one or more tokens may be active at any given time.

In some embodiments or aspects, the token format may allow entities in the payment system to identify the issuer associated with the token. For example, the format of the token may include a token issuer identifier that allows an entity (e.g. the payment processing network) to identify an issuer of the token. For instance, the token issuer identifier may be associated with an issuer's BIN of the underlying PAN in order to support the existing payment flow. The token issuer identifier may be a different number than the issuer's BIN and may be static. For example, if the issuer's BIN for an issuer is 412345, the token issuer identifier may be a token BIN of 428325 and this number may be static for all tokens issued from or for that issuer. In some embodiments or aspects, the token issuer identifier range (e.g., issuer token BIN range) may have the same attributes as the associated issuer card range and can be included in an issuer identifier routing table (e.g., BIN routing table). The issuer identifier routing table may be provided to the relevant entities in the payment system (e.g., merchants and acquirers).

"User" or "content consumer" may include an individual. In some embodiments or aspects, a user may be associated with one or more personal accounts and/or mobile devices. The user may also be referred to as a cardholder, account holder, or consumer.

Having discussed some descriptions of terms used herein, the present disclosure now turns to a description of specific embodiments, aspects, or examples, as provided below.

The content creator economy is growing at an exponential rate and the consumption of video content has grown manifolds in the last decade. There are many streaming platforms like YouTube, Twitch, Netflix, Prime Video, among others, which allow users (creators, production houses) to upload content and monetize the content.

Today most monetization of media content is done in a proprietary way by the media platforms. For example, when a video is uploaded to YouTube, YouTube could monetize the video by displaying ads and then share some part of the collected revenue with the content creator. If a user wants to monetize content on multiple platforms, he/she would have to upload the content to multiple media platforms in multiple locations. Also, streaming platforms take a huge chunk of the revenue which might not be a favorable to the content creators.

The present disclosure provides digital rights management (DRM) rails and the power of a payment network and tokenization to provide a system and method to enable a content creator to more effectively monetize their content. The proposed system and method facilitates the creation and packaging of the content by content creators in a way that allows the content creators to receive a fair share of revenue no matter which streaming platform is used to deliver the content. The system and method also employs DRM rails to facilitate the content creators in protecting their copyrights.

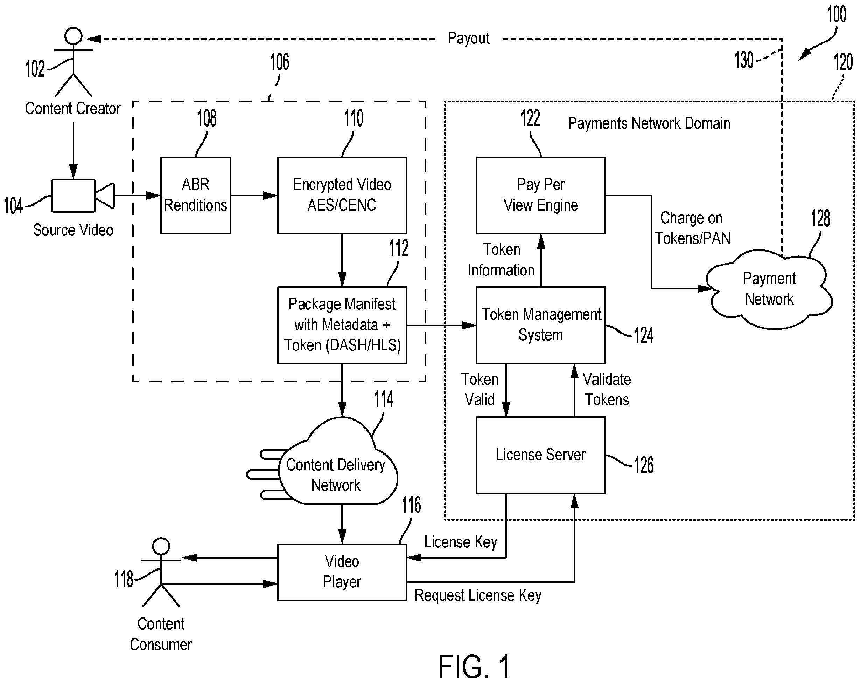

Turning now to the figures, FIG. 1 illustrates a pay-per-view system 100 without a video streaming service, according to at least one aspect of the present disclosure. The pay-per-view system 100 comprises a server computer 106 to receive the source video content 104 created by the content creator 102 and interfaces with a payments network domain 120 and a content delivery network 114. The server computer 106 may comprise an adaptive bit rate (ARB) module 108, and video encryption module 110, and a packaging module 112. The payments network domain 120 comprises a token management system 124, a content license server computer 126, a pay-per-view engine 122, and a payment network 128. The various computing devices of the pay-per-view system 100 are in communication and can communicate over a communication channel to deliver content from the content creator 102 to the content consumer 118 such that the content creator 102 receives revenue for the content from the content consumer 118.

The content creator 102 creates th source video content 104 such as, for example, a video, image etc. This could be anything from educational videos for an online learning and teaching marketplace (e.g., Udemy) or a video sharing website that makes it easy to watch online videos (e.g., YouTube channel).

The source video content 104 created by the content creator 102 is provided to a server computer 106 for rendition, encryption, and packaging. The server computer 106 can be a web server, for example. The ABR module 108 renders the source video content 104 in ARB format, which is widely used in streaming applications. This render allows the source video content 104 to be available in multiple compression levels.

A video encryption module 110 converts the ABR video received from the ABR module 108 into an encrypted video stream. The encrypted video stream may be encrypted in a symmetric block cipher such as, for example, the advanced encryption standard (AES) simple or a common encryption scheme (CENC). The CENC encryption scheme specifies standard encryption and key mapping methods that can be utilized by one or more digital rights and key management.

A packaging module 112 packages the encrypted video with a package manifest file comprising a metadata file (e.g., dynamic adaptive streaming over http [DASH], http live streaming [HLS]) and a payment network token. DASH is based on HTTP, thus any origin server can be set up to serve MPEG-DASH streams. MPEG-DASH is similar to HLS, another streaming protocol, in that it breaks videos down into smaller chunks and encodes those chunks at different quality levels. HLS is highly scalable for delivering live streams and video content across global content delivery networks (CDNs) using ordinary web servers.

The metadata file comprises the following information:
a. content id (identifier of the source video content 104)
b. key_id (identifier of information used in a cryptographic algorithm obtain a license for the content)
c. license_acquisition_url (web address of the content license server computer 126)
d. creator token_reference (reference to the content creator 102 token)
e. cost_per_view (amount charged by the content creator 102 to the content consumer 118)

The packaging module 112 sends account credentials or an account identifier associated with the content creator 102 to a token management system 124. The account credentials may include a PAN or a PAN token, among others. During this operation, the creator_token_reference is received by the packaging module 112 from the token management system 124. The creator_token_reference is then updated in the manifest file.

The packaged content (e.g., video) along with the manifest file is delivered to a content delivery network 114 for efficient caching and delivery to a content player 116, such as, a video player, for example. The video is loaded or requested by the content player 116 from the content delivery network 114. A content consumer 118 can watch monetized content, such as the video, on a channel, such as YouTube, Udemy etc., by providing his/her payment card details or token to the content player 116. The content player 116 receives a player_token_reference from the content consumer 118.

Because the video is encrypted, the content player 116 requires a license key to play the content, e.g., video. The content player 116 requests a license key from a content license server computer 126 by sending the following information:
a. content id
b. key_id
c. license acquisition_url
d. creator_token_reference
e. cost_per_view
f. player_token_reference (reference to the content player 116 token)

The content license server computer 126 validates the creator and player token references (creator_token_reference and player_token_reference) with the token management system 124 to ensure that both tokens are valid. The token management system 124 passes the token information to a pay-per-view engine 122 for billing/charging the content player 116 or the content consumer 118 for the viewed content and sending the money, or other measure of monetization, to the content creator 102. The pay-per-view engine 122 initiates a charge or payout 130 through the payment network 128.

A token validation response is passed from the token management system 124 to the content license server computer 126. The content license server computer 126 creates a time bound license key for the content. The content player 116 uses the license key received from the content license server computer 126 to play the content for the content consumer 118.

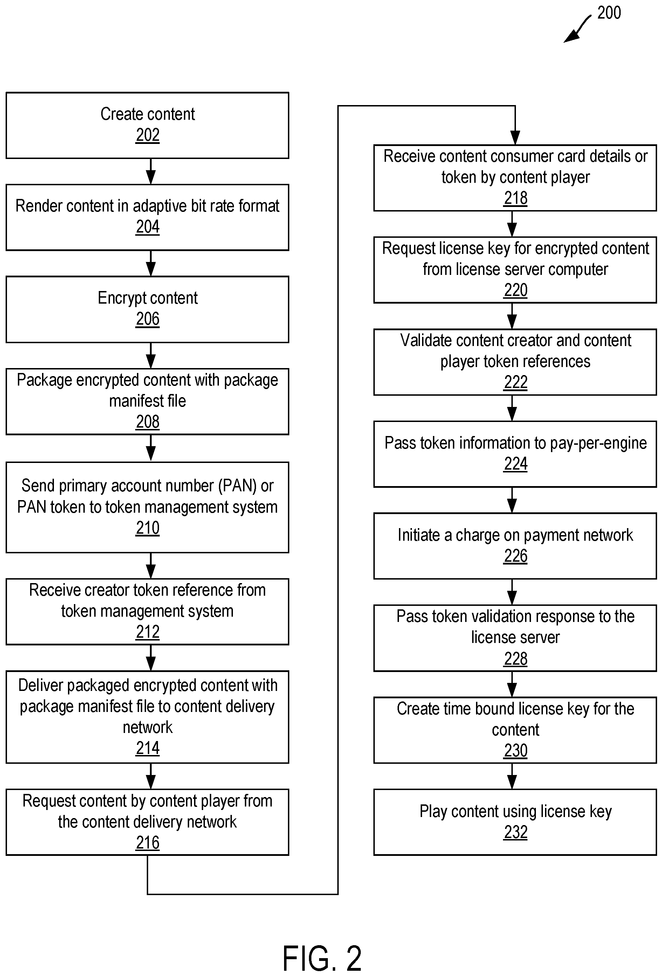

FIG. 2 is a logic flow diagram of a process 200 for the pay-per-view system 100 without a video streaming service shown in FIG. 1, according to at least one aspect of the present disclosure. With reference to FIG. 2 together with FIG. 1, according to the process 200, the content creator 102 creates 202 content referenced as the source video content 104. The ABR module 108 renders 204 the source video content 104 in ABR format. The video encryption module 110 encrypts 206 the ABR formatted content and the packaging module 112 packages 208 the ABR formatted encrypted content with a package manifest file comprising a metadata file. The metadata file comprises the following information:
a. content id
b. key_id
c. license acquisition_url
d. creator_token_reference
e. cost_per_view

The packaging module 112 sends 210 the content creator's 102 account credential/account identifier (e.g., PAN number or PAN token) to the token management system 124. The packaging module 112 receives 212 a content creator 102 token reference from the token management system 124. The server computer 106 now delivers 214 the packaged encrypted content with the package manifest file to the content delivery network 114.

The content consumer 118 employs the content player 116 to view the content. The content player 116 requests 216 content from the content delivery network 114. In order to view the content, the content consumer 118 provides consumer card details or token to the content player 116. The content player 116 receives 218 the consumer card details or token from the content consumer 118 and requests 220 a license key from the content license server computer 126 to view the encrypted content received form the content delivery network 114. The content player 116 includes the following information in the license request:
a. content id
b. key_id
c. license acquisition_url
d. creator_token_reference
e. cost_per_view
f. player_token_reference

The content license server computer 126 validates 222 the content creator 102 and content player 116 token references received in the license key request submitted to the token management system 124. The token management system 124 then passes 224 the token information to the pay-per-view engine 122 for billing/charging the content player 116 or content consumer 118 and paying the content creator 102 for the source video content 104. The pay-per-view engine 122 initiates 226 a charge through the payment network 128, which sends a payout to the content creator 102. The token management system 124 passes 228 a token validation response to the content license server computer 126, which creates 230 a time bound license key for the content and enables the content player 116 to play 232 the content using the license key.

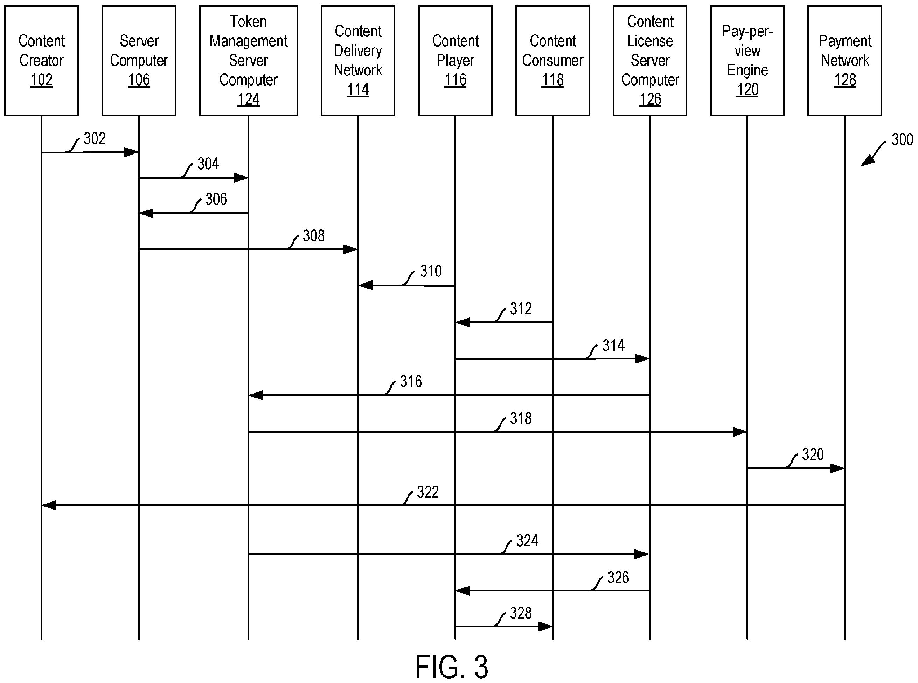

FIG. 3 is a swimlane diagram 300 of an implementation of the process 200 shown in FIG. 2, according to at least one aspect of the present disclosure. The content creator 102 sends 302 content to a server computer 106. The server computer 106 renders the content into an ABR format and encrypts the ABR formatted content file. The server computer 106 packages the ABR formatted and encrypted content with a manifest file comprising a metadata comprising the following information:
a. content id
b. key_id
c. license acquisition_url
d. creator_token_reference
e. cost_per_view

The server computer 106 sends 304 a content creator 102 PAN or a PAN token to a token management system 124. The server computer 106 receives 306 a content creator 102 token reference from the token management system 124. The server computer 106 then sends 308 the rendered and encrypted version of the content along with the packaged manifest metadata file to a content delivery network 114. The content player 116 requests 310 or loads the content from the content delivery network 114. In order to view the content, however, the content player 116 receives 312 the content consumer 118 card details or token and requests 314 a license key for the content from the content license server computer 126. The content player 116 includes the following information in the request 314 for the license key:
a. content id
b. key_id
c. license acquisition_url
d. creator_token_reference
e. cost_per_view
f. player token_reference

The content license server computer 126 sends 316 a request to the token management system 124 to validate the content creator and content player token references received in the license key request. The token management system 124 passes 318 the token information to the pay-per-view engine 122 for billing/charging the content player 116 or content consumer 118 and paying the content creator 102 for the source video content 104. The pay-per-view engine 122 initiates 320 a charge through the payment network 128, which sends 322 a payout to the content creator 102. The token management system 124 passes 324 a token validation response to the content license server computer 126, which creates 326 a time bound license for the content and enables the content player 116 to play 328 the content using the license for the content consumer 118.

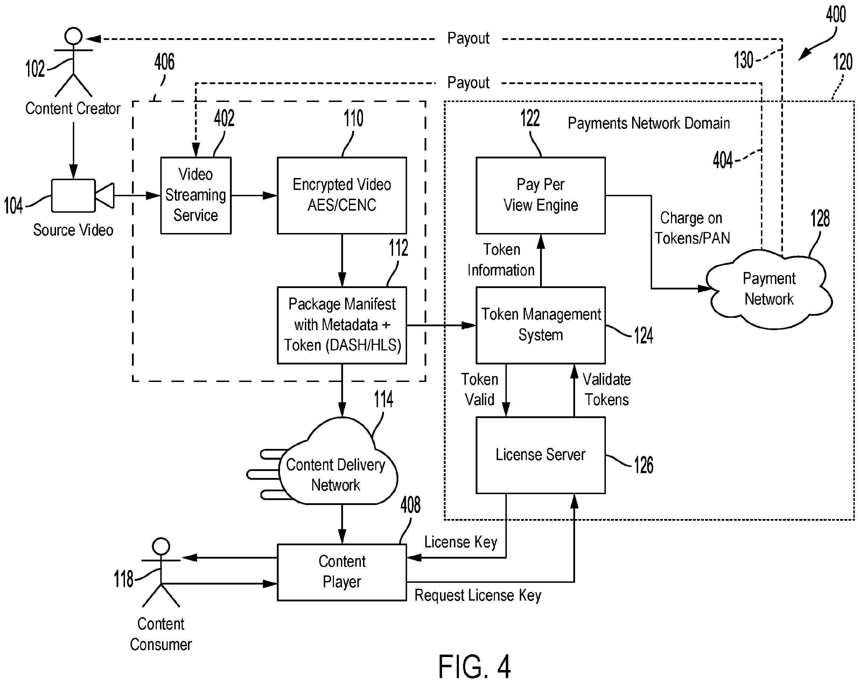

FIG. 4 illustrates a pay-per-view system 400 with a video streaming service provider 402, according to at least one aspect of the present disclosure. The pay-per-view system 400 comprises a media server computer 406 to receive the source video content 104 created by the content creator 102 and interfaces with a payments network domain 120 and a content delivery network 114. The media server computer 406 may comprise a video streaming service provider 402 (e.g., YouTube, Twitch), and video encryption module 110, and a packaging module 112. The payments network domain 120 comprises a token management system 124, a content license server computer 126, a pay-per-view engine 122, and a payment network 128.

The content creator 102 creates the source video content 104 such as, for example, a video, image etc. This could be anything from educational videos for an online learning and teaching marketplace (e.g., Udemy) or a video sharing website that makes it easy to watch online videos (e.g., YouTube, Twitch).

The source video content 104 (e.g., source video) created by the content creator 102 is provided to a media server computer 406 for the video streaming service provider 402, encryption, and packaging. The media server computer 406 can be a media server, for example.

A video encryption module 110 converts the streamed video received from the video streaming service provider 402 into an encrypted video stream. The encrypted video stream may be encrypted in a symmetric block cipher such as, for example, the advanced encryption standard (AES) simple or a common encryption scheme (CENC), for example. The CENC encryption scheme specifies standard encryption and key mapping methods that can be utilized by one or more digital rights and key management.

A packaging module 112 packages the encrypted video with a package manifest file comprising a metadata file (e.g., dynamic adaptive streaming over http [DASH], http live streaming [HLS]) and a payment network token. DASH is based on HTTP, thus any origin server can be set up to serve MPEG-DASH streams. MPEG-DASH is similar to HLS, another streaming protocol, in that it breaks videos down into smaller chunks and encodes those chunks at different quality levels. HLS is highly scalable for delivering live streams and video content across global content delivery networks (CDNs) using ordinary web servers.

The metadata file comprises the following information:
a. content id
b. key_id
c. license acquisition_url
d. creator_token_reference
e. streaming_provider token_reference (a reference to the streaming content provider)
f. cost_per_view

The packaging module 112 sends a content creator 102 account credential/account identifier (e.g., PAN or a PAN token) to a token management system 124. During this operation, the creator_token_reference and streaming_provider_token_reference is received by the packaging module 112 from the token management system 124. The creator_token_reference and streaming_provider_token_reference is then updated in the manifest file.

The packaged content (e.g., video) along with the manifest file is delivered to a content delivery network 114 for efficient caching and delivery to the content player 408 such as for example YouTube or Twitch. The video is loaded or requested by the content player 408 from the content delivery network 114. A content consumer 118 can watch monetized content, such as the video, on a channel, such as YouTube, Twitch, etc., by providing his/her payment card details or token to the content player 408. The content player 408 receives a player_token_reference from the content consumer 118.

Because the video is encrypted, the content player 408 requires a license key to play the content, e.g., video. The content player 408 makes a request to a content license server computer 126 by sending the following information:
a. content id
b. key_id
c. license acquisition_url
d. creator_token_reference
e. streaming_provider_token_reference
f. cost_per_view
g. player_token_reference

The content license server computer 126 validates the creator, streaming service provider, and player token references (creator_token_reference, streaming_provider token_reference, and player_token_reference) with the token management system 124 to check if these tokens are valid. The token management system 124 passes the token information to a pay-per-view engine 122 for billing/charging the content consumer 118 and send the money, or other measure of monetization, to the content creator 102 and the video streaming service provider 402. Through the payment network 128, the pay-per-view engine 122 initiates a charge or payout 130 to the content creator 102 and initiates a charge or payout 404 to the video streaming service provider 402.

A token validation response is passed from the token management system 124 to the content license server computer 126. The content license server computer 126 creates a time bound license key for the content. The content player 408 uses the license key received from the content license server computer 126 to play the content for the content consumer 118.

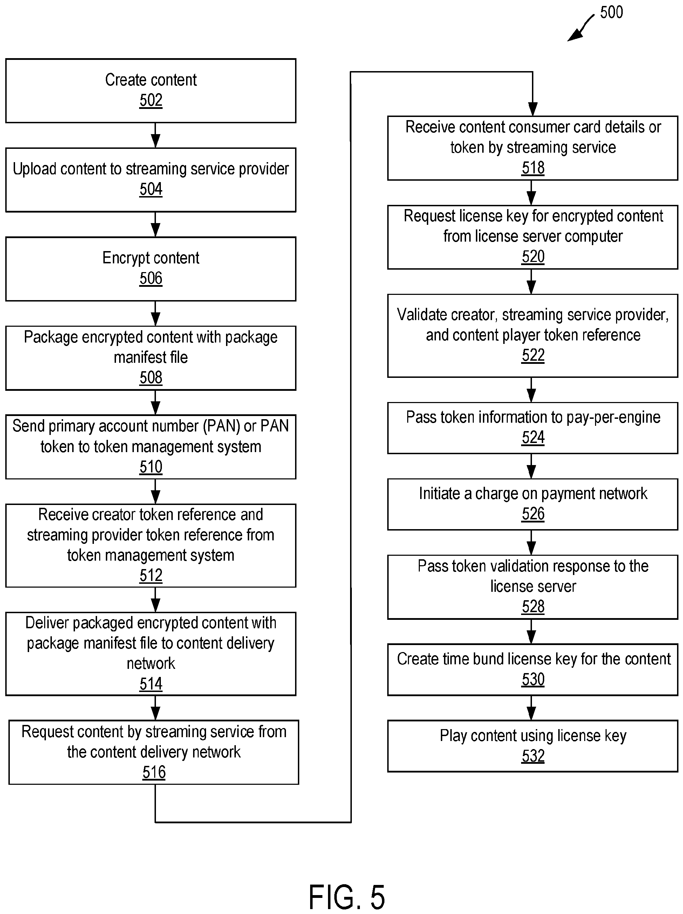

FIG. 5 is a logic flow diagram of a process 500 for the pay-per-view system 400 without a video streaming service provider 402 shown in FIG. 4, according to at least one aspect of the present disclosure. With reference to FIG. 5 together with FIG. 4, according to the process 500, the content creator 102 creates 502 content referenced as the source video content 104. The content creator 102 uploads 504 the source video content 104 to a video streaming service provider 402. The video encryption module 110 encrypts 506 the source video content 104 and the packaging module 112 packages 508 the source video content 104 with a package manifest file comprising a metadata file. The metadata file comprises the following information:
a. content id
b. key_id
c. license acquisition_url
d. creator_token_reference
e. streaming_provider_token_reference
f. cost_per_view

The packaging module 112 sends 510 the content creator's 102 PAN number or PAN token to the token management system 124. The packaging module 112 receives 512 a content creator 102 token reference and a streaming provider token reference from the token management system 124. The server computer 106 now delivers 514 the packaged encrypted content with the package manifest file to the content delivery network 114.

The content consumer 118 employs the content player 408 to view the content. The content player 408 requests 516 content from the content delivery network 114. In order to view the content, the content consumer 118 provides consumer card details or token to the content player 408. The content player 408 receives 518 the consumer card details or token from the content consumer 118 and requests 520 a license key from the content license server computer 126 to view the encrypted content received form the content delivery network 114. The content player 408 includes the following information in the license request:
a. content id
b. key_id
c. license acquisition_url
d. creator_token_reference
e. streaming_provider_token_reference
f. cost_per_view
g. player_token_reference

The content license server computer 126 validates 522 the content creator, streaming service provider, and content player token references received in the license key request with the token management system 124. The token management system 124 then passes 524 the token information to the pay-per-view engine 122 for billing/charging the content player 408 and paying the content creator 102 and the video streaming service provider 402 for the source video content 104. The pay-per-view engine 122 initiates 526 a charge through the payment network 128, which sends payout to the content creator 102 and the video streaming service provider 402. The token management system 124 passes 528 a token validation response to the content license server computer 126, which creates 530 a time bound license key for the content and enables the content player 408 to play 532 the content using the license key.

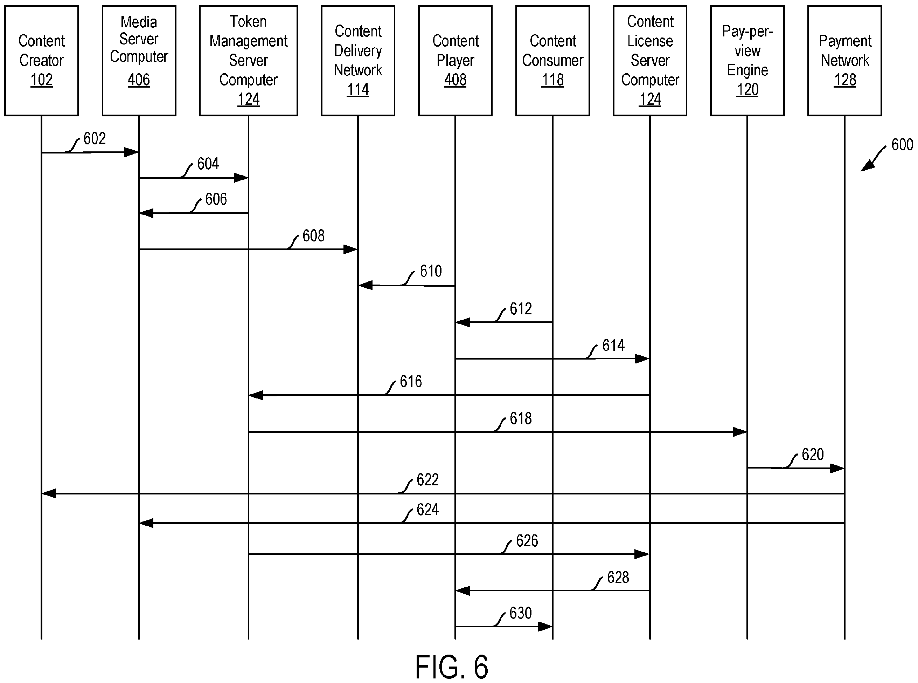

FIG. 6 is a swimlane diagram 600 of an implementation of the process 500 shown in FIG. 5, according to at least one aspect of the present disclosure. The content creator 102 sends 602 content to a media server computer 406. The media server computer 406 packages the content with a manifest file comprising a metadata comprising the following information:
a. content id
b. key_id
c. license acquisition_url
d. creator_token_reference
e. streaming_provider_token_reference
f. cost_per_view

The media server computer 406 sends 604 a content creator 102 PAN or a PAN token to a token management system 124. The media server computer 406 receives 606 a content creator 102 token reference and a streaming provider token reference from the token management system 124. The media server computer 406 then sends 608 the encrypted version of the content along with the packaged manifest metadata file to a content delivery network 114. The content player 408 requests 610 or loads the content from the content delivery network 114. In order to view the content, however, the content player 408 receives 612 the content consumer 118 card details or token and requests 614 a license key for the content from the content license server computer 126. The content player 408 includes the following information in the request 614 for the license key:
a. content id
b. key_id
c. license acquisition_url
d. creator_token_reference
e. streaming_provider_token_reference
f. cost_per_view
g. player_token_reference

The content license server computer 126 sends 616 a request to the token management system 124 to validate the content creator, streaming service provider, and content player token references received in the license key request. The token management system 124 passes 618 the token information to the pay-per-view engine 122 for billing/charging the content player 116 or content consumer 118 and paying the content creator 102 and the video streaming service provider 402 for the source video content 104. The pay-per-view engine 122 initiates 620 a charge through the payment network 128, which sends 622 a payout to the content creator 102 and sends 624 a payout to the video streaming service provider 402 through the media server computer 406. The token management system 124 passes 626 a token validation response to the content license server computer 126, which creates 628 a time bound license key for the content and enables the content player 408 to play 630 the content using the license key for the content consumer 118.

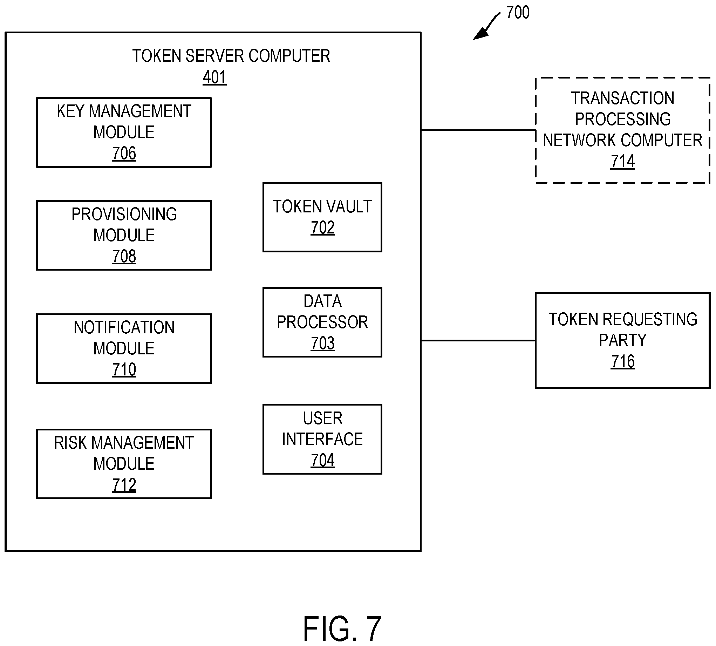

FIG. 7 illustrates a block diagram of a tokenization environment 700 portion of the token management system 124 shown in FIGS. 1 and 4, according to at least one aspect of the present disclosure. FIG. 7 illustrates an example tokenization environment 700 including a token server computer 701 of a token service provider. The token server computer 701 may be in communication with a token requesting party 716 such as, for example, the packaging module 112 as shown in FIGS. 1 and 4. The token requesting party 716 may operate a token requesting party computer. In some embodiments, the token server computer 701 also may be in communication with a transaction processing network computer 714 such as, for example, the payment network 128 shown in FIGS. 1 and 4. In other embodiments, the token server computer 701 may part of the payment network 128. In various embodiments, the token server computer 701 is in communication with a payment network token gateway server computer.

The token server computer 701 may be responsible for provisioning a token to the packaging module 112 using a provisioning module 708 in conjunction with a data processor 703. Provisioning may include creating a token within a token vault 702 for an account, sending the token to the token requesting party 716 and sending the token to the packaging module 112.

The token requesting party 716 may provide a set of account identifiers to the token server computer 701. The token server computer 701 may generate (or determine) a token for the account identifier received from the packaging module 112 operated by the token requesting party 716. The generated tokens may be stored at a token vault 702. The token vault 702 also may store a mapping between each token and the account identifier identifying the account represented by the token. The token vault 702 also may be used by the transaction processing network computer 714 to de-tokenize the token and convert the token to the account number represented by the token when a transaction authorization is processed through the transaction processing network computer 714. The token vault 702 also may manage all domain restrictions associated with each token provisioned.

The token requesting party 716 also may select, with the data processor 703 executing the key management module 706 of the token server computer 701, an option associated with encryption keys. For example, the token requesting party 716 may choose to provide the encryption keys to the token server computer 701 via the key management module 706. In some embodiments, the token requesting party 716 may choose to leave the key generation to the token server computer 701. The token server computer 701 may generate (or determine) the tokens based on the option associated with the encryption keys. The token server computer 701 may generate a token associated with at least one encryption key for each account identifier of the set of account identifiers. The token server computer 701 may store the encryption keys along with the associated tokens in the token vault 702. The encryption keys may then be provided to a user device of the account holder. The tokens and corresponding encryption keys may be used in tokenized transactions processed by the transaction processing network computer.

The token requesting party 716 also may initiate a request to receive a message when a token has been generated and/or provisioned for one of the accounts associated with the token requesting party 716. The token server computer 701 may generate a notification using the data processor 703 executing code in the notification module 710 based on the notification criteria (e.g., when a token satisfies the notification criteria) provided by the token requesting party 716. It also may send the notification to the token requesting party 716. For example, the token requesting party 716 may request a notification when a token is generated. The notification module 710 of the token server computer 701 may generate and send a notification to the token requesting party 716 when the token is generated. Similarly, the token requesting party 716 may request a notification when a token is provisioned on a user device. The notification module 710 of the token server computer 701 may generate and send a notification to the token requesting party 716 when the token is provisioned on the user device. For example, the notification module 710 may be informed by the provisioning module 708 that the token has been provisioned.

The token server computer 701 also may include a risk management module 712 that can work in conjunction with the data processor 703 to set up rules for risk decisioning when the token server computer 701 receives the token provisioning request from the token requesting party 716. As part of further customization of the token generation process, the token requesting party 716 may indicate rules for provisioning or processing the token based on a risk assessment associated with a transacting party, a device used in the transaction, or the account itself. In some embodiments, the token requesting party 716 may provide a restriction that is placed on one or more of the generated tokens based on the risk decision making rules.

The token server computer 701 shown in FIG. 7 is provided for illustration purposes and should not be construed as limiting. The token server computer 701 may include more or less components than those illustrated in FIG. 7. For example, the token server computer 701 may include additional software modules, such as a processing module, a lifecycle management module, etc. These and other modules may, in conjunction with the data processor 703, allow the token server computer 701 to perform one or more of the following functions: map an account identifier to a token and store the mapping in the token vault with relevant domain restrictions; provision a token from the token vault to a user device; manage (e.g., delete, suspend, resume, etc.) the token both at the token vault and on the user device; generate encryption keys based on the token requesting party's request; manage encryption keys based on predetermined criteria; process tokenized transactions including performing cryptogram validation, domain restriction checks, and validity checks; and perform post-transaction verification processing to verify that transactions and account updates are conducted on the user device after the transaction is processed by the transaction processing network.

In some embodiments, the token server computer 701 may support contactless payment use cases. This includes support for contactless payment methods using a secure element and Host Card Emulation (HCE)-based payment applications.

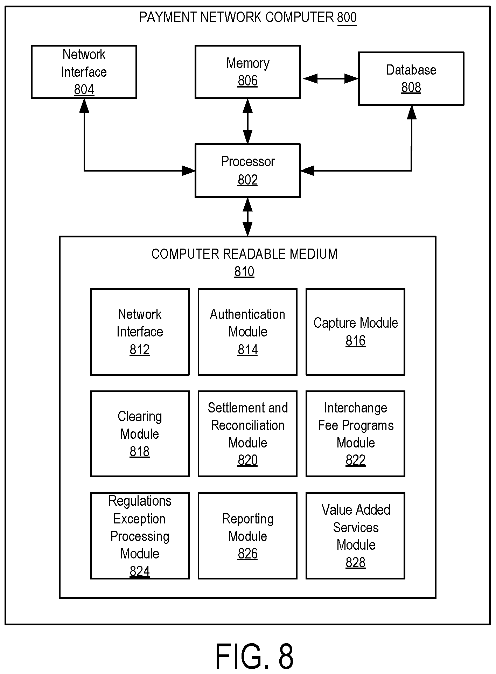

FIG. 8 shows a block diagram of a payment network computer 800, according to at least one aspect of the present disclosure. FIG. 8 illustrates components of the payment network computer 800, according to at least one aspect of the present disclosure. In some embodiments, the payment network 128 shown in FIGS. 1, 3, 4, and 6 may be implemented using or in a similar manner to the payment network computer 800.

The payment network computer 800 may include a processor 802 communicatively coupled to a network interface 804, a memory 806, a database 808, and a computer readable medium 810.

The network interface 804 may be configured to allow the payment network computer 800 to communicate with other entities such as the pay-per-view engine 122, token management system 124, or content license server computer 126, as shown in FIGS. 1 and 4, an acquirer computer, a different payment processing network, an issuer computer, etc. using one or more communications networks.

The memory 806 may be used to store data. The memory 806 may be coupled to the processor 802 internally or externally (e.g., cloud based data storage) and may comprise any combination of volatile and/or non-volatile memory, for example, RAM, DRAM, ROM, flash, or any other suitable memory device.

The database 808 may store data associated with a plurality of consumers such as consumer personal and payment account information.

The computer readable medium 810 may be in the form of a memory (e.g., flash, ROM, etc.) and may comprise code, executable by the processor 802 for implementing methods described herein. The computer readable medium 810 may include an authorization module 812, an authentication module 814, a capture module 816, a clearing module 818, a settlement and reconciliation module 820, an interchange fee programs module 822, a regulations and exception processing module 824, a reporting module 826, and a value added services module 828.

The authorization module 812 may comprise code, executable by the processor 802 to validate token data elements, to provide a token assurance level, to provide support for lost and stolen devices and for token exchange.

The authorization module 812 may also comprise code, executable by the processor 802, to process an authorization request message comprising a token. In one embodiment, the authorization module 812, in conjunction with the processor 802, may validate the token requestor identifier to determine if the transaction can be approved or declined. For example, the token requestor identifier may be associated with a wallet application that may be used by a consumer to initiate a transaction using a consumer device. The token requestor identifier may be provided by the network token system to a wallet application during the onboarding process. In some embodiments, the authorization module 812 may approve or decline the transaction using various data associated with the transaction such as a token presentment mode, token number, token timestamp, token expiration date, token assurance level, a determination that the account used to conduct the transaction is lost, stolen, or compromised, or any other suitable data. The aforementioned data may be determined from the contents of the authorization request message for a transaction, a token registry database, or any other suitable source.

In one embodiment, the authorization module 812, working in conjunction with the processor 802, may provide support for token exchange. For example, the authorization module 812 may modify the authorization request message to replace the token with a PAN and send the modified authorization request message to an issuer. The authorization module 812 may also restore the token in the authorization response message received from the issuer before forwarding it to an acquirer computer. In some embodiments, records of the authorization may be contained in an authorization log database that can be transmitted to the participating acquirers. The data contained in the authorization log database can be in a plurality of file formats.

In some embodiments, the authorization module 812 may be configured to process payment transactions that use a token associated with a different payment network. For example, in some embodiments, the authorization module 812 may be configured to generate and send a token verification request to a payment network associated with the token, or specifically to a network token system associated with a payment network. The authorization module 812 may be further configured to receive a token verification response including the original PAN associated with the token and a validation result. The issuer associated with the original PAN may be determined, and an authorization request message for the transaction including the original PAN and the validation result may be sent to the issuer computer.

The authentication module 814 may comprise code that can be executed to the processor 802 to apply one or more authentication methods to authenticate token transactions based on the presentment modes. In one embodiment, the authentication module 814 may comprise code for authenticating the QR^{™} code token transactions using existing authentication schemes (e.g., entering personal information into a keypad). In another example, the authentication module 814 may comprise code for authenticating contactless EMV token transactions based on dCWs that are formed with our without ATCs (Application Transaction Counters) or cryptograms.

The capture module 816 may comprise code for processing a capture file. For example, a merchant computer may send the token requestor identifier in the capture file that is sent to the acquirer computer. The payment network computer 800 can convert the token into a PAN and provide the PAN to the acquirer computer in the capture file to prepare clearing drafts pursuant to existing processing rules.

The clearing module 818 may be configured to process clearing transactions with tokens. A clearing process may be performed to reconcile orders among the transacting entities such as the issuer computer and the acquirer computer/merchant computer. When a token is used in a clearing draft message, a token requestor identifier may be present in the appropriate data field. In one embodiment, for Base II processing, the clearing module 818 can substitute clearing draft messages received with a token with the PAN for related clearing processing. In some embodiments, if the authorization was conducted with a token, the token is replaced with a PAN in the authorization data files provided to the acquirer computer. The token number and expiration date can be processed pursuant to existing rules and can be provided in the clearing draft message (e.g., in the expiration date field).

In some embodiments, the clearing draft message may include a token assurance level. In one embodiment, at the time of transaction processing, if the token requestor identifier is present, the token can be validated against the token requestor identifier to which the token was originally issued. If the validation fails, the payment processing network computer may return an appropriate code in the clearing draft message. In some embodiments, based on the issuer option of receiving the token requestor identifier, the payment processing network computer may forward the token requestor identifier in the clearing draft message to the issuer computer. In some embodiments, the acquirer computer may retain and return the token requestor identifier value used in the original transaction in all the subsequent transactions. In one embodiment, the POS condition code and the POS entry mode code fields can reflect the applicable token presentment mode in the clearing draft message.

The settlement and reconciliation module 820 may be configured to process settlement and reconciliation transactions with tokens. The settlement and reconciliation module 820 may provide support for the token requestor identifier and its validation in the reports and raw data files associated with the settlement and reconciliation processing of the transactions. In one embodiment, the settlement and reconciliation module 820 may include the tokens and the token requestor identifier in the reports and raw data files destined to the acquirer computer. In one embodiment, the settlement and reconciliation module 820 may include the real PAN and optionally the token requestor identifier in the reports and raw data files destined to the issuer computer. In some embodiments, the interface for processing transaction files (e.g., edit package) may be enhanced to process tokens in place of the PANs.

The interchange fee programs module 822 may comprise code for determining interchange rates and fees for token based transactions. Payment transactions conducted with tokens can qualify for existing fee programs and interchange rates applicable to the respective presentment modes and available card products.

The regulations/exception processing module 824 may be configured to apply operating regulations and perform liability and dispute processing for token payment transactions. Payment transactions with tokens can qualify for existing liability rules applicable to the respective presentment modes and available card products. For example, acquires and issuers can qualify for existing chargeback rules based on the presentment modes. The regulations/exception processing module 824 can map the tokens used in the original transactions to facilitate dispute processing related to chargebacks.

The reporting module 826 may be configured to provide reporting for token payment transactions. In some embodiments, the reporting module 826 may provide reports for each country and regions based on token attributes such as the token number and token ranges, token requestor identifier, consumer token assurance level, token expiration date, COF (card on file) indicator and the token presentment mode.

The value added services module 828 may comprise code for supporting value added services to support token transactions. For example, account update functions of merchant enquiry and setup of payment controls can be supported for tokens.

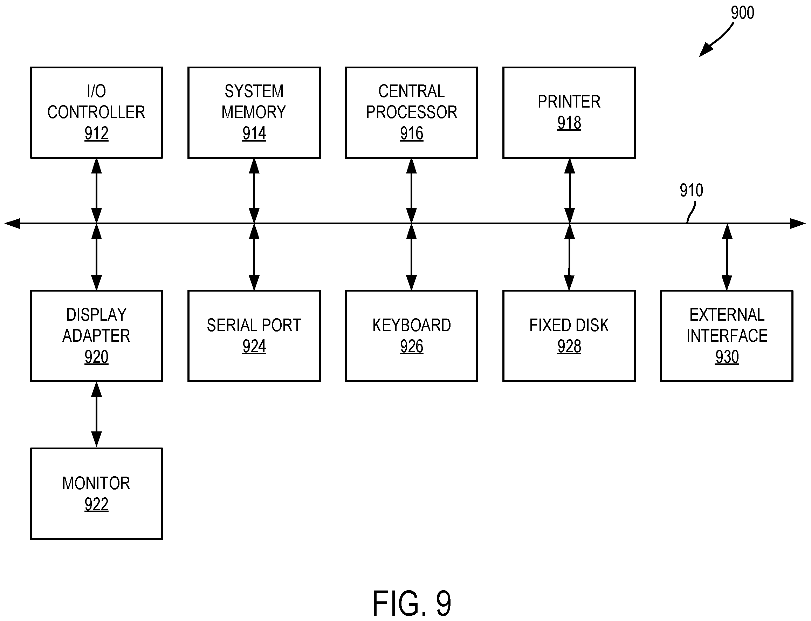

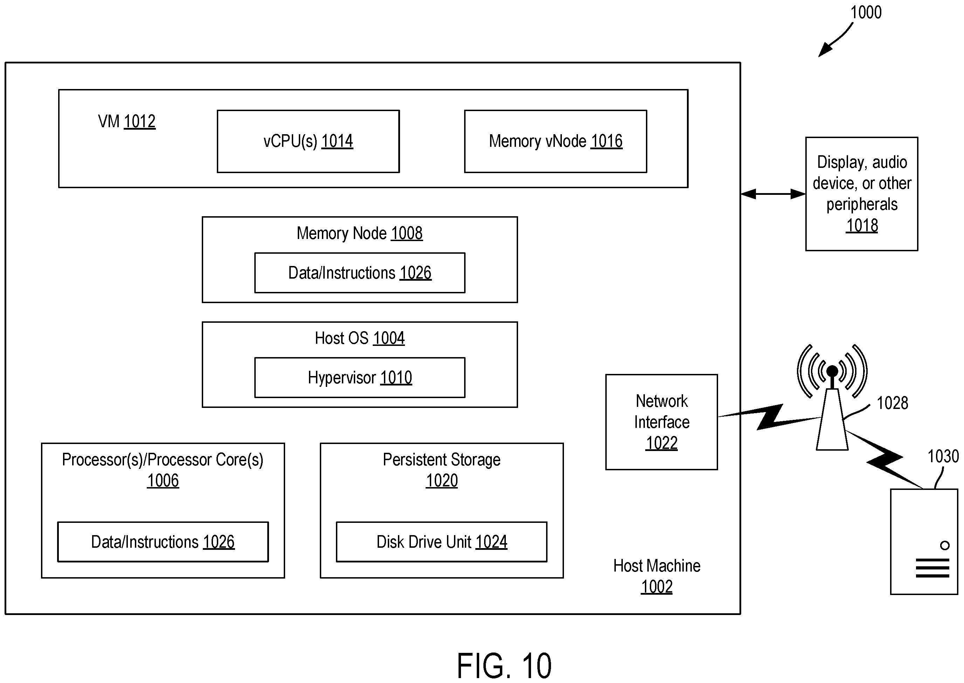

The media server computers 106, 406, content license server computer 126, token management system 124, and pay-per-view engine 122 shown in FIGS. 1 and 4 may be implemented in accordance with the computer apparatus 900 shown in FIG. 9 and/or the example system 1000 shown in FIG. 10. The computer apparatus 900 and the example system 1000 are described hereinbelow with respect to FIGS. 9 and 10.

FIG. 9 is a block diagram of a computer apparatus 900 with data processing subsystems or components, according to at least one aspect of the present disclosure. The subsystems shown in FIG. 9 are interconnected via a system bus 910. Additional subsystems such as a printer 918, keyboard 926, fixed disk 928 (or other memory comprising computer readable media), monitor 922, which is coupled to a display adapter 920, and others are shown. Peripherals and input/output (I/O) devices, which couple to an I/O controller 912 (which can be a processor or other suitable controller), can be connected to the computer system by any number of means known in the art, such as a serial port 924. For example, the serial port 924 or external interface 930 can be used to connect the computer apparatus to a wide area network such as the Internet, a mouse input device, or a scanner. The interconnection via system bus allows the central processor 916 to communicate with each subsystem and to control the execution of instructions from system memory 914 or the fixed disk 928, as well as the exchange of information between subsystems. The system memory 914 and/or the fixed disk 928 may embody a computer readable medium.

FIG. 10 is a diagrammatic representation of an example system 1000 that includes a host machine 1002 within which a set of instructions to perform any one or more of the methodologies discussed herein may be executed, according to at least one aspect of the present disclosure. In various aspects, the host machine 1002 operates as a standalone device or may be connected (e.g., networked) to other machines. In a networked deployment, the host machine 1002 may operate in the capacity of a server or a client machine in a server-client network environment, or as a peer machine in a peer-to-peer (or distributed) network environment. The host machine 1002 may be a computer or computing device, a personal computer (PC), a tablet PC, a set-top box (STB), a personal digital assistant (PDA), a cellular telephone, a portable music player (e.g., a portable hard drive audio device such as an Moving Picture Experts Group Audio Layer 3 (MP3) player), a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example system 1000 includes the host machine 1002, running a host operating system (OS) 1004 on a processor or multiple processor(s)/processor core(s) 1006 (e.g., a central processing unit (CPU), a graphics processing unit (GPU), or both), and various memory nodes 1008. The host OS 1004 may include a hypervisor 1010 which is able to control the functions and/or communicate with a virtual machine ("VM") 1012 running on machine readable media. The VM 1012 also may include a virtual CPU or vCPU 1014. The memory nodes 1008 may be linked or pinned to virtual memory nodes or vNodes 1016. When the memory node 1008 is linked or pinned to a corresponding vNode 1016, then data may be mapped directly from the memory nodes 1008 to their corresponding vNodes 1016.

All the various components shown in host machine 1002 may be connected with and to each other, or communicate to each other via a bus (not shown) or via other coupling or communication channels or mechanisms. The host machine 1002 may further include a video display, audio device or other peripherals 1018 (e.g., a liquid crystal display (LCD), alphanumeric input device(s) including, e.g., a keyboard, a cursor control device, e.g., a mouse, a voice recognition or biometric verification unit, an external drive, a signal generation device, e.g., a speaker,) a persistent storage device 1020 (also referred to as disk drive unit), and a network interface device 1022. The host machine 1002 may further include a data encryption module (not shown) to encrypt data. The components provided in the host machine 1002 are those typically found in computer systems that may be suitable for use with aspects of the present disclosure and are intended to represent a broad category of such computer components that are known in the art. Thus, the example system 1000 can be a server, minicomputer, mainframe computer, or any other computer system. The computer may also include different bus configurations, networked platforms, multi-processor platforms, and the like. Various operating systems may be used including UNIX, LINUX, WINDOWS, QNX ANDROID, IOS, CHROME, TIZEN, and other suitable operating systems.

The disk drive unit 1024 also may be a Solid-state Drive (SSD), a hard disk drive (HDD) or other includes a computer or machine-readable medium on which is stored one or more sets of instructions and data structures (e.g., data/instructions 1026) embodying or utilizing any one or more of the methodologies or functions described herein. The data/instructions 1026 also may reside, completely or at least partially, within the main memory node 1008 and/or within the processor(s) 1006 during execution thereof by the host machine 1002. The data/instructions 1026 may further be transmitted or received over a network 1028 via the network interface device 1022 utilizing any one of several well-known transfer protocols (e.g., Hyper Text Transfer Protocol (HTTP)).

The processor(s) 1006 and memory nodes 1008 also may comprise machine-readable media. The term "computer-readable medium" or "machine-readable medium" should be taken to include a single medium or multiple medium (e.g., a centralized or distributed database and/or associated caches and servers) that store the one or more sets of instructions. The term "computer-readable medium" shall also be taken to include any medium that is capable of storing, encoding, or carrying a set of instructions for execution by the host machine 1002 and that causes the host machine 1002 to perform any one or more of the methodologies of the present application, or that is capable of storing, encoding, or carrying data structures utilized by or associated with such a set of instructions. The term "computer-readable medium" shall accordingly be taken to include, but not be limited to, solid-state memories, optical and magnetic media, and carrier wave signals. Such media may also include, without limitation, hard disks, floppy disks, flash memory cards, digital video disks, random access memory (RAM), read only memory (ROM), and the like. The example aspects described herein may be implemented in an operating environment comprising software installed on a computer, in hardware, or in a combination of software and hardware.

One skilled in the art will recognize that Internet service may be configured to provide Internet access to one or more computing devices that are coupled to the Internet service, and that the computing devices may include one or more processors, buses, memory devices, display devices, input/output devices, and the like. Furthermore, those skilled in the art may appreciate that the Internet service may be coupled to one or more databases, repositories, servers, and the like, which may be utilized to implement any of the various aspects of the disclosure as described herein.

The computer program instructions also may be loaded onto a computer, a server, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

Suitable networks may include or interface with any one or more of, for instance, a local intranet, a PAN (Personal Area Network), a LAN (Local Area Network), a WAN (Wide Area Network), a MAN (Metropolitan Area Network), a virtual private network (VPN), a storage area network (SAN), a frame relay connection, an Advanced Intelligent Network (AIN) connection, a synchronous optical network (SONET) connection, a digital T1, T3, E1 or E3 line, Digital Data Service (DDS) connection, DSL (Digital Subscriber Line) connection, an Ethernet connection, an ISDN (Integrated Services Digital Network) line, a dial-up port such as a V.90, V.34 or V.34bis analog modem connection, a cable modem, an ATM (Asynchronous Transfer Mode) connection, or an FDDI (Fiber Distributed Data Interface) or CDDI (Copper Distributed Data Interface) connection. Furthermore, communications may also include links to any of a variety of wireless networks, including WAP (Wireless Application Protocol), GPRS (General Packet Radio Service), GSM (Global System for Mobile Communication), CDMA (Code Division Multiple Access) or TDMA (Time Division Multiple Access), cellular phone networks, GPS (Global Positioning System), CDPD (cellular digital packet data), RIM (Research in Motion, Limited) duplex paging network, Bluetooth radio, or an IEEE 802.11-based radio frequency network. The server 1030 can further include or interface with any one or more of an RS-232 serial connection, an IEEE-1394 (Firewire) connection, a Fiber Channel connection, an IrDA (infrared) port, a SCSI (Small Computer Systems Interface) connection, a USB (Universal Serial Bus) connection or other wired or wireless, digital or analog interface or connection, mesh or Digi^{®} networking.

In general, a cloud-based computing environment is a resource that typically combines the computational power of a large grouping of processors (such as within web servers) and/or that combines the storage capacity of a large grouping of computer memories or storage devices. Systems that provide cloud-based resources may be utilized exclusively by their owners or such systems may be accessible to outside users who deploy applications within the computing infrastructure to obtain the benefit of large computational or storage resources.

The cloud is formed, for example, by a network of web servers that comprise a plurality of computing devices, such as the host machine 1002, with each server 1030 (or at least a plurality thereof) providing processor and/or storage resources. These servers manage workloads provided by multiple users (e.g., cloud resource customers or other users). Typically, each user places workload demands upon the cloud that vary in real-time, sometimes dramatically. The nature and extent of these variations typically depends on the type of business associated with the user.

It is noteworthy that any hardware platform suitable for performing the processing described herein is suitable for use with the technology. The terms "computer-readable storage medium" and "computer-readable storage media" as used herein refer to any medium or media that participate in providing instructions to a CPU for execution. Such media can take many forms, including, but not limited to, non-volatile media, volatile media, and transmission media. Non-volatile media include, for example, optical or magnetic disks, such as a fixed disk. Volatile media include dynamic memory, such as system RAM. Transmission media include coaxial cables, copper wire and fiber optics, among others, including the wires that comprise one aspect of a bus. Transmission media can also take the form of acoustic or light waves, such as those generated during radio frequency (RF) and infrared (IR) data communications. Common forms of computer-readable media include, for example, a flexible disk, a hard disk, magnetic tape, any other magnetic medium, a CD-ROM disk, digital video disk (DVD), any other optical medium, any other physical medium with patterns of marks or holes, a RAM, a PROM, an EPROM, an EEPROM, a FLASH EPROM, any other memory chip or data exchange adapter, a carrier wave, or any other medium from which a computer can read.

Various forms of computer-readable media may be involved in carrying one or more sequences of one or more instructions to a CPU for execution. A bus carries the data to system RAM, from which a CPU retrieves and executes the instructions. The instructions received by system RAM can optionally be stored on a fixed disk either before or after execution by a CPU.

Computer program code for carrying out operations for aspects of the present technology may be written in any combination of one or more programming languages, including an object oriented programming language such as Java, Smalltalk, C++, or the like and conventional procedural programming languages, such as the "C" programming language, Go, Python, or other programming languages, including assembly languages. The program code may execute entirely on the user's computer, partly on the user's computer, as a standalone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Examples of the method according to various aspects of the present disclosure are provided below in the following numbered clauses. An aspect of the method may include any one or more than one, and any combination of, the numbered clauses described below.

Clause 1. A pay-per-view system, comprising a token management server computer to receive an account credential from a content creator; and send a content creator token reference to a content delivery network; a content license server computer to receive a request for a content license key from a content player, wherein the request comprises the content creator token reference and a content player token reference; validate the content creator token reference; validate the content player token reference; receive a token validation response from the token management server computer; create a time bound license for content created by the content creator; and send the content license key to the content player.

Clause 2. The pay-per-view system of clause 1, wherein the content license server computer is to send a validated content creator token reference to the token management server computer; and send a validated content player token reference to the token management server computer.

Clause 3. The pay-per-view system of any one of clauses 1 or 2, comprising a pay-per-view engine to receive token information from the token management server computer; charge the content player or a content consumer; and initiate, on a payment network server computer, a payment to the content creator based on the token information.

Clause 4. The pay-per-view system of clause 3, wherein the token information comprises a validated content creator token reference; and a validated content player token reference; initiate, by the pay-per-view engine on the payment network server computer, the payment to the content creator based on the validated content creator token reference and the validated content player token reference.

Clause 5. The pay-per-view system of any one of clauses 3 or 4, wherein the payment network server computer is to submit a payout to the content creator.

Clause 6. The pay-per-view system of any one of clauses 1 to 5, wherein the token management server computer is to send a content creator token reference and a streaming provider token reference to a content delivery network.

Clause 7. The pay-per-view system of any one of clauses 1 to 6, wherein the content license server computer is to receive a request for a content license key from a video streaming service, wherein the request comprises the content creator token reference and a streaming provider token reference; send the content license key to the video streaming service; charge the video streaming service or a content consumer; and initiate a charge on a payment network server computer on the content creator token reference and the streaming provider token reference.

Clause 8. The pay-per-view system of clause 7, wherein the payment network server computer is to submit a portion of payout to the content creator and another portion of payout to the video streaming service.

Clause 9. A pay-per-view method, comprising receiving, by a token management server computer, an account credentials from a content creator; and sending, by the token management server computer, a content creator token reference to a content delivery network; receiving, by a content license server computer, a request for a content license key from a content player, wherein the request comprises the content creator token reference and a content player token reference; validating, by the content license server computer, the content creator token reference; validating, by the content license server computer, the content player token reference; receiving, by the content license server computer, a token validation response from the token management server computer; creating, by the content license server computer, a time bound license for content created by the content creator; and sending, by a content license server computer, the content license key to the content player.

Clause 10. The pay-per-view method of clause 9, comprising sending, by the content license server computer, a validated content creator token reference to the token management server computer; and sending, by the content license server computer, a validated content player token reference to the token management server computer.

Clause 11. The pay-per-view method of any one of clauses 9 or 10, comprising receiving, by a pay-per-view engine, token information from the token management server computer; charging, by the pay-per-view engine on a payment network server computer, the content player or a content consumer; and initiating, by the pay-per-view engine on the payment network server computer, a payment to the content creator based on the token information.

Clause 12. The pay-per-view method of clause 11, wherein receiving the token information comprises receiving, by the pay-per-view engine, a validated content creator token reference; and receiving, by the pay-per-view engine, a validated content player token reference; and initiating, by the pay-per-view engine on the payment network server computer, the payment to the content creator based on the validated content creator token reference and the validated content player token reference.

Clause 13. The pay-per-view method of any one of clauses 9 to 12, wherein the method comprises submitting, by a payment network computer, a payout to the content creator.

Clause 14. The pay-per-view method of any one of clause 9 to 13, wherein the method comprises sending, by a token management server computer, a content creator token reference and a streaming provider token reference to a content delivery network.

Clause 15. The pay-per-view method of any one of clauses 9 to 14, wherein the method comprises receiving, by a content license server computer, a request for a content license key from a video streaming service, wherein the request comprises the content creator token reference and a streaming provider token reference; sending, by the content license server computer, the content license key to the video streaming service; charging, by the content license server computer, the video streaming service or a content consumer; and initiating, by the content license server computer, a charge on a payment network on the content creator token reference and the streaming provider token reference.

Clause 16. The pay-per-view method of clause 15, wherein the method comprises submitting, by a payment network server computer, a portion of payout to the content creator and another portion of payout to the video streaming service.

Clause 17. A content delivery system, comprising a content delivery server computer to receive an encrypted media content file; package the encrypted media content file with a manifest file comprising metadata information and creating a packaged encrypted media content file; send an account credential to a token management system; receive a content creator token reference from the token management system; update the content creator token reference in the manifest file metadata information; and deliver the packaged encrypted media content file and the manifest file to a content delivery network.

Clause 18. The content delivery system of clause 17, wherein the content delivery network is to receive a request for the packaged encrypted media content file from a media content player; and deliver the packaged encrypted media content file to the media content player based on the request.

Clause 19. The content delivery system of clause 18, wherein the media content player is to receive from a media content user, either payment card details or a player token reference for viewing the packaged encrypted media content file; send license information associated with the packaged encrypted media content file to a license server; request a license key from a license server by sending license information to the license server to enable the media player to play the packaged encrypted media content file.

Clause 20. The content delivery system of clause 19, wherein the license server is to validate the content creator and the player token reference; pass the token information to a pay-per-view engine for charging the media content player or the media content consumer and sending a payment to a content creator; and create a time bound license for the media content file to enable the media content player to play the packaged encrypted media content file; and wherein the pay-per-view engine is to initiate a charge on a payments network; and pass a token validation response to the license server.

The foregoing detailed description has set forth various forms of the systems and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, and/or examples can be implemented, individually and/or collectively, by a wide range of hardware, software, firmware, or virtually any combination thereof. Those skilled in the art will recognize that some aspects of the forms disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein are capable of being distributed as one or more program products in a variety of forms, and that an illustrative form of the subject matter described herein applies regardless of the particular type of signal bearing medium used to actually carry out the distribution.

Instructions used to program logic to perform various disclosed aspects can be stored within a memory in the system, such as dynamic random access memory (DRAM), cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, compact disc, read-only memory (CD-ROMs), and magneto-optical disks, read-only memory (ROMs), random access memory (RAM), erasable programmable read-only memory (EPROM), electrically erasable programmable read-only memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the non-transitory computer-readable medium includes any type of tangible machine-readable medium suitable for storing or transmitting electronic instructions or information in a form readable by a machine (e.g., a computer).

Any of the software components or functions described in this application, may be implemented as software code to be executed by a processor using any suitable computer language such as, for example, Python, Java, C++ or Perl using, for example, conventional or object-oriented techniques. The software code may be stored as a series of instructions, or commands on a computer readable medium, such as RAM, ROM, a magnetic medium such as a hard-drive or a floppy disk, or an optical medium such as a CD-ROM. Any such computer readable medium may reside on or within a single computational apparatus, and may be present on or within different computational apparatuses within a system or network.

As used in any aspect herein, the term "logic" may refer to an app, software, firmware and/or circuitry configured to perform any of the aforementioned operations. Software may be embodied as a software package, code, instructions, instruction sets and/or data recorded on non-transitory computer readable storage medium. Firmware may be embodied as code, instructions or instruction sets and/or data that are hard-coded (e.g., nonvolatile) in memory devices.

As used in any aspect herein, the terms "component," "system," "module" and the like can refer to a computer-related entity, either hardware, a combination of hardware and software, software, or software in execution.

As used in any aspect herein, an "algorithm" refers to a self-consistent sequence of steps leading to a desired result, where a "step" refers to a manipulation of physical quantities and/or logic states which may, though need not necessarily, take the form of electrical or magnetic signals capable of being stored, transferred, combined, compared, and otherwise manipulated. It is common usage to refer to these signals as bits, values, elements, symbols, characters, terms, numbers, or the like. These and similar terms may be associated with the appropriate physical quantities and are merely convenient labels applied to these quantities and/or states.

A network may include a packet switched network. The communication devices may be capable of communicating with each other using a selected packet switched network communications protocol. One example communications protocol may include an Ethernet communications protocol which may be capable of permitting communication using a Transmission Control Protocol/Internet Protocol (TCP/IP). The Ethernet protocol may comply or be compatible with the Ethernet standard published by the Institute of Electrical and Electronics Engineers (IEEE) titled "IEEE 802.3 Standard", published in December, 2008 and/or later versions of this standard. Alternatively or additionally, the communication devices may be capable of communicating with each other using an X.25 communications protocol. The X.25 communications protocol may comply or be compatible with a standard promulgated by the International Telecommunication Union-Telecommunication Standardization Sector (ITU-T). Alternatively or additionally, the communication devices may be capable of communicating with each other using a frame relay communications protocol. The frame relay communications protocol may comply or be compatible with a standard promulgated by Consultative Committee for International Telegraph and Telephone (CCITT) and/or the American National Standards Institute (ANSI). Alternatively or additionally, the transceivers may be capable of communicating with each other using an Asynchronous Transfer Mode (ATM) communications protocol. The ATM communications protocol may comply or be compatible with an ATM standard published by the ATM Forum titled "ATM-MPLS Network Interworking 2.0" published August 2001, and/or later versions of this standard. Of course, different and/or after-developed connection-oriented network communication protocols are equally contemplated herein.

Unless specifically stated otherwise as apparent from the foregoing disclosure, it is appreciated that, throughout the present disclosure, discussions using terms such as "processing," "computing," "calculating," "determining," "displaying," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

One or more components may be referred to herein as "configured to," "configurable to," "operable/operative to," "adapted/adaptable," "able to," "conformable/conformed to," etc. Those skilled in the art will recognize that "configured to" can generally encompass active-state components and/or inactive-state components and/or standby-state components, unless context requires otherwise.

Those skilled in the art will recognize that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to claims containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that typically a disjunctive word and/or phrase presenting two or more alternative terms, whether in the description, claims, or drawings, should be understood to contemplate the possibilities of including one of the terms, either of the terms, or both terms unless context dictates otherwise. For example, the phrase "A or B" will be typically understood to include the possibilities of "A" or "B" or "A and B."

With respect to the appended claims, those skilled in the art will appreciate that recited operations therein may generally be performed in any order. Also, although various operational flow diagrams are presented in a sequence(s), it should be understood that the various operations may be performed in other orders than those which are illustrated, or may be performed concurrently. Examples of such alternate orderings may include overlapping, interleaved, interrupted, reordered, incremental, preparatory, supplemental, simultaneous, reverse, or other variant orderings, unless context dictates otherwise. Furthermore, terms like "responsive to," "related to," or other past-tense adjectives are generally not intended to exclude such variants, unless context dictates otherwise.

It is worthy to note that any reference to "one aspect," "an aspect," "an exemplification," "one exemplification," and the like means that a particular feature, structure, or characteristic described in connection with the aspect is included in at least one aspect. Thus, appearances of the phrases "in one aspect," "in an aspect," "in an exemplification," and "in one exemplification" in various places throughout the specification are not necessarily all referring to the same aspect. Furthermore, the particular features, structures or characteristics may be combined in any suitable manner in one or more aspects.

As used herein, the singular form of "a", "an", and "the" include the plural references unless the context clearly dictates otherwise.

Any patent application, patent, non-patent publication, or other disclosure material referred to in this specification and/or listed in any Application Data Sheet is incorporated by reference herein, to the extent that the incorporated materials is not inconsistent herewith. As such, and to the extent necessary, the disclosure as explicitly set forth herein supersedes any conflicting material incorporated herein by reference. Any material, or portion thereof, that is said to be incorporated by reference herein, but which conflicts with existing definitions, statements, or other disclosure material set forth herein will only be incorporated to the extent that no conflict arises between that incorporated material and the existing disclosure material. None is admitted to be prior art.

In summary, numerous benefits have been described which result from employing the concepts described herein. The foregoing description of the one or more forms has been presented for purposes of illustration and description. It is not intended to be exhaustive or limiting to the precise form disclosed. Modifications or variations are possible in light of the above teachings. The one or more forms were chosen and described in order to illustrate principles and practical application to thereby enable one of ordinary skill in the art to utilize the various forms and with various modifications as are suited to the particular use contemplated. It is intended that the claims submitted herewith define the overall scope.

## Claims

1. A pay-per-view system, comprising:
a token management server computer (124) to:
receive an account credential from a content creator (102); and
send a content creator token reference to a content delivery network (114);
a content license server computer (126) to:
receive a request for a content license key from a content player (116), wherein the request comprises the content creator token reference and a content player token reference;
validate the content creator token reference;
validate the content player token reference;
receive a token validation response from the token management server computer;
create a time bound license for content created by the content creator; and
send the content license key to the content player.

2. The pay-per-view system of claim 1, wherein the content license server computer (126) is to:
send a validated content creator token reference to the token management server computer (124); and
send a validated content player token reference to the token management server computer (124).

3. The pay-per-view system of any preceding claim, comprising a pay-per-view engine (122) to:
receive token information from the token management server computer (124);
charge the content player or a content consumer; and
initiate, on a payment network server computer (128), a payment to the content creator based on the token information, wherein the token information comprises:
a validated content creator token reference; and
a validated content player token reference.

4. The pay-per-view system of any preceding claim, wherein the token management server computer (124) is to:
send a content creator token reference and a streaming provider token reference to thecontent delivery network (114).

5. The pay-per-view system of any preceding claim, wherein the content license server computer (126) is to:
receive a request for a content license key from a video streaming service (402), wherein the request comprises the content creator token reference and a streaming provider token reference;
send the content license key to the video streaming service;
charge the video streaming service or a content consumer (118); and
initiate a charge on a payment network server computer (128) on the content creator token reference and the streaming provider token reference.

6. The pay-per-view system of claim 5, wherein the payment network server computer (128) is to submit a payout to the content creator and/or submit a payout to the video streaming service.

7. A pay-per-view method, comprising:
receiving, by a token management server computer (124), an account credentials from a content creator (102); and
sending, by the token management server computer (124), a content creator token reference to a content delivery network (114);
receiving, by a content license server computer (126), a request for a content license key from a content player (408), wherein the request comprises the content creator token reference and a content player token reference;
validating, by the content license server computer (126), the content creator token reference;
validating, by the content license server computer (126), the content player token reference;
receiving, by the content license server computer (126), a token validation response from the token management server computer (124);creating, by the content license server computer (126), a time bound license for content created by the content creator; and
sending, by the content license server computer (126), the content license key to the content player.

8. The pay-per-view method of claim 7, comprising:
sending, by the content license server computer (126), a validated content creator token reference to the token management server computer (124); and
sending, by the content license server computer (126), a validated content player token reference to the token management server computer (124).

9. The pay-per-view method of claim 7 or claim 8, comprising:
receiving, by a pay-per-view engine, token information from the token management server computer (124);
charging, by the pay-per-view engine on a payment network server computer (128), the content player or a content consumer (118); and
initiating, by the pay-per-view engine on the payment network server computer, a payment to the content creator based on the token information.

10. The pay-per-view method of claim 9, wherein receiving the token information comprises:
receiving, by the pay-per-view engine, a validated content creator token reference; and
receiving, by the pay-per-view engine, a validated content player token reference; and
initiating, by the pay-per-view engine on the payment network server computer, the payment to the content creator based on the validated content creator token reference and the validated content player token reference.

11. The pay-per-view method of any of claims 7 to 10, wherein the method comprises:
sending, by the token management server computer (124), a content creator token reference and a streaming provider token reference to the content delivery network (114).

12. The pay-per-view method of any of claims 7 to 11, wherein the method comprises:
receiving, by the content license server computer (126), a request for a content license key from a video streaming service (402), wherein the request comprises the content creator token reference and a streaming provider token reference;
sending, by the content license server computer (126), the content license key to the video streaming service;
charging, by the content license server computer (126), the video streaming service or a content consumer (118); and
initiating, by the content license server computer (126), a charge on a payment network on the content creator token reference and the streaming provider token reference.

13. A content delivery system, comprising:
a content delivery server computer (106) to:
receive an encrypted media content file;
package the encrypted media content file with a manifest file comprising metadata information and creating a packaged encrypted media content file;
send an account credential to a token management system (124);
receive a content creator token reference from the token management system (124);
update the content creator token reference in the manifest file metadata information; and
deliver the packaged encrypted media content file and the manifest file to a content delivery network (114).

14. The content delivery system of claim 13, further comprising a media content player (116), wherein the media content player is to:
receive from a media content user (118), either payment card details or a player token reference for viewing the packaged encrypted media content file;
send license information associated with the packaged encrypted media content file to a license server (126);
request a license key from the license server (126) by sending license information to the license server to enable the media player (116) to play the packaged encrypted media content file.

15. The content delivery system of claim 14, wherein the license server (126) is to:
validate the content creator and the player token reference;
pass token information to a pay-per-view engine (122) for charging the media content player or media content consumer and sending a payment to a content creator (102); and
create a time bound license for the media content file to enable the media content player to play the packaged encrypted media content file; and
wherein the pay-per-view engine is to:
initiate a charge on a payments network (128); and
pass a token validation response to the license server (126).
